# EUROPEAN PATENT APPLICATION

(11) **EP 1 575 290 A2**
(43) Date of publication of application: **14.09.2005**
(21) Application number: 05250667.2
(22) Date of filing: 05.02.2005
(51) Int. Cl.: H04N 5/926

(54) **A/V recording and reproducing system using an A/V CODEC having a video encoder therein**

(30) Priority: 09.03.2004 KR 2004015728
(71) Applicant: SAMSUNG ELECTRONICS CO., LTD., Gyeonggi-cho (KR)
(72) Inventor: Lee, Kyu-sang, Seoul (KR)
(74) Representative: Brandon, Paul Laurence

(57) **Abstract**

An optical disc recording and reproducing system having a single chip used for a video (131) encoder and an A/V CODEC (130). The optical disc recording and reproducing system includes a recording medium (161) recording in stream data digital audio data and video data encoded in certain compression formats; an A/V output part (230) outputting audio and video signals corresponding to the stream data read out from the recording medium (161); an A/V CODEC (130) converting the video data into a video signal of a certain format that the A/V output part (230) can process; and an audio DAC (223) converting the audio data into an audio signal that the A/V output part (230) can process.

## Description

The present invention generally relates to audio/video recording and reproducing systems.

Conventional optical disc recording and reproducing systems separate a reproduction signal read out from a recording medium into an audio signal and a video signal, and decode the separated audio and video signals according to corresponding compression formats, respectively. The recording medium may be a hard disk drive, a memory, a peripheral device or optical discs such as a CD-R, CD-ROM, DVD, Blu-ray, Advanced Optical Disc (AOD), etc.

In order to display the decoded reproduction signal on a display device (not shown) such as a television, the conventional optical disc recording and reproducing systems have a video encoder converting the decoded reproduction signal into a signal processable by the display device. That is, the video encoder converts a decoded digital video signal into a super video signal having separated luminance signal Y and color signals Cr and Cb, an analog signal having mixed luminance signal Y and color signal C, or a composite video signal (CVBS), which are processable by the display device (not shown).

As described above, the conventional optical disc recording and reproducing systems have a separate video encoder that converts a digital video signal decoded in a certain compression format into an analog video signal. However, implementation of such optical disc recording and reproducing systems causes problems, such as complexity, an increased number of components and cost increases.

An aim of preferred embodiments of the present invention is to provide an audio/video (A/V) recording and reproducing system having a single chip used for an audio encoder and an A/V encoder/decoder (CODEC).

According to the present invention there is provided an A/V recording and reproducing system including a recording medium recording in stream data digital audio data and video data encoded in certain compression formats; an A/V output part outputting audio and video signals corresponding to the stream data read out from the recording medium; an A/V CODEC converting the video data of the stream data into a video signal of a certain format processable by the A/V output part; and an audio DAC converting the audio data of the stream data into an audio signal of a certain format processable by the A/V output part. The A/V CODEC separates the stream data into the audio data and the video data, and decodes the audio data and the video data in the certain compression formats.

Suitably, the recording medium is at least one of an optical disc, a memory card, a hard disc drive, or an external device connected to the system through a certain interfacing method.

Suitably, the CODEC includes a video encoder converting the video data decoded in the certain compression format into a video signal of another certain format processable by the A/V output part, and the A/V CODEC and the video encoder are implemented into a single chip.

Suitably, the A/V CODEC decodes the separated video data according to the MPEG format. Thus, the A/V recording and reproducing system having a single chip therein for the video encoder and the A/V CODEC, can simplify the system implementation and reduce the implementation cost.

Further features of the present invention are set out in the appended claims.

The present invention will become apparent and more readily appreciated from the following description of the embodiments, by way of example only, taken in conjunction with the accompanying drawing of which:

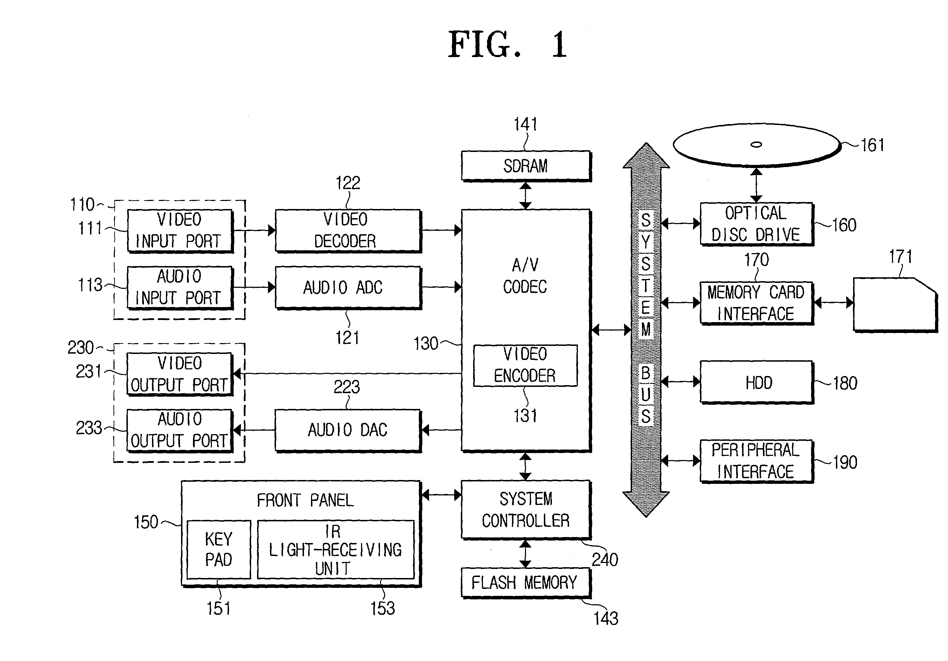

Figure 1 is a schematic block diagram illustrating an optical disc recording and reproducing system according to an exemplary embodiment of the present invention.

Reference will now be made in detail to the embodiments of the present invention, examples of which are illustrated in the accompanying drawing, wherein like reference numerals refer to the like elements throughout. The embodiments are described below to explain the present invention by referring to the figure.

Figure 1 illustrates an audio/video (A/V) recording and reproducing system according to an exemplary embodiment of the present invention, which is substantially a block diagram of an optical disc recording and reproducing system according to an exemplary embodiment of the present invention.

As shown in Figure 1, the optical disc recording and reproducing system includes an A/V input part 110, an audio analog-to-digital converter (ADC) 121, a video decoder 122, an A/V encoder-decoder (CODEC) 130, a synchronous dynamic random access memory (SDRAM) 141, a flash memory 143, a front panel 150, an optical disc drive 160, a memory card interface 170, a hard disc drive (HDD) 180, a peripheral interface 190, an audio digital-to-analog converter (DAC) 223, an A/V output part 230, and a system controller 240.

The A/V input part 110 includes a video input port 111 for inputting various kinds of video signals and an audio input port 113 for inputting an audio signal. For example, the video input port 111 has ports for separately receiving the digital luminance signal Y and color signals Cr and Cb of a super video signal, a port for receiving a mixed analog signal of the luminance signal Y and the color signal C, and a radio frequency (RF) port for receiving a sky-wave broadcast signal.

The audio ADC 121 converts an analog audio signal, which is input from the audio input port 113, into a digital signal for an output.

The video decoder 122 converts the diverse video signals input from the video input port 111 into digital video signals.

The A/V CODEC 130 encodes and decodes an audio signal and a video signal according to certain compression formats, and has the video encoder 131 converting the decoded video signal into a signal processable by the display device (not shown). The A/V CODEC 130 encodes according to certain compression formats the video signal and the audio signal that the video decoder 122 and the audio DAC 121 have signal-processed, respectively. The A/V CODEC 130 mixes the encoded video and audio signals for output as stream data. That is, the A/V CODEC 130 encodes a video signal according to, for example, the MPEG-2 (Video) format standard referred to as ISO/IEC 13818-3, encodes an audio signal according to, for example, the Dolby AC-3 digital standard, and outputs the encoded video and audio signals in stream data. The encoding approach is not restrained to the MPEG-2, but can be extended to other MPEG standards, for example, MPEG-1 or MPEG-4.

The stream data read out from an optical disc 161 in the optical disc drive 160 is separated into audio data and video data, and the separated audio and video data is decoded by the A/V CODEC 130 according to respective compression formats. Out of the decoded signals, the audio data is output, and the video data is converted by the video encoder 131 to output as any one or more of a super video signal separated into the luminance signal Y and the color signals Cr and Cb, a mixed analog signal of the luminance signal Y and a color signal C, or a composite video signal (CVBS).

The SDRAM 141 is used as a temporary storage space for the encoding and decoding in the A/V CODEC 130.

The flash memory 143 stores an Operating System and various application programs for operating the system.

A user interfaces with the front panel 150 to input commands to set or select functions supported by the system. The front panel includes a key pad 151 provided with various operation buttons and an IR light-receiving unit 153 which receives commands transmitted from a remote controller (not shown). It is understood that a touch screen may also be used as the input device for the front panel 150.

The optical disc drive 160 outputs to the A/V CODEC 130 a signal reproduced through an optical pickup unit (not shown) from data recorded on the optical disc 161. The optical disc drive 160 records, on the optical disc 161 through the optical pickup device (not shown), the stream data compressed in a predetermined compression format by the A/V CODEC 130. The optical disc may be a CD-R, CD-ROM, DVD, Blu-ray, Advanced Optical Disc (AOD), etc.

The memory card interface 170 receives and transmits data between the system controller 240 and the built-in memory card 171, and the memory card 171 stores data of diverse formats. For example, the memory card 171 can store data such as still picture files like Joint Photographic Experts Group (JPEG) files, moving picture files and music files like MPEG layer-3 (MP3) files, and various programs used to operate the system.

The HDD 180 is a storage medium, which is similar to the optical disc 161 or the memory card 171, supported by the system according an exemplary embodiment of the present invention, and storing the still picture files, moving picture files, and music files.

The peripheral interface 190 supports Universal Serial Bus (USB) and IEEE1394 interfacing, by which data in a digital video stream is received from and transmitted to peripherals using the USB or the IEEE 1394 interfacing to enhance the stream data transmission rate.

The audio DAC 223 converts into an analog audio signal a digital audio signal decoded in a certain compression format by the A/V CODEC 130. The audio DAC 223 converts the decoded audio signal of the A/V CODEC 130 into an analog signal according to a certain compression format, the audio signal having been read out from the optical disc 161 or a different recording medium that the system can support.

The A/V output part 230 has a video output port 231 to output a video signal in diverse formats and an audio output port 233 to output an audio signal. For example, the video output port 231 has ports to separately output the luminance signal Y and color signals Cr and Cb of a super video signal, and a port to output a mixed analog signal of the luminance signal Y and the color signal C. The system controller 240 controls the overall operations of the system according to system operation and setting commands input from the front panel 150.

Hereinafter, with reference to Figure 1, description will be made on a process for the A/V CODEC 130 having a video encoder 131 therein to reproduce a moving picture file recorded on a recording medium such as the optical disc 161 and to output the reproduced moving picture file to the display device (not shown) connected to the system.

The optical disc drive 160 reads by use of the optical pickup unit (not shown) and outputs as an RF signal moving picture data of stream data recorded on the optical disc 161. The RF signal is processed into a digital signal and input into the A/V CODEC 130. A DSP chip for processing the reproduced RF signal into a digital signal can be provided in the A/V CODEC 130.

The A/V CODEC 130 separates the moving picture data into audio data and video data, and decodes the separated audio data and video data according to respective corresponding audio and video compression formats.

For example, the A/V CODEC 130 decodes the audio data according to the Dolby AC-3 digital standard, which is an encoding format, and decodes video data encoded according to the MPEG-2 format, which is a compression format.

As explained above, the video and audio signals respectively decoded according to corresponding predetermined formats are converted into certain signals that can be processed by the display device (not shown) connected to the system.

Thus, the video encoder 131 built in the A/V CODEC 130 converts the decoded video signal into a super video signal separated into the luminance signal Y and the color signals Cr and Cb, a mixed analog signal of the luminance signal Y and the color signal C, and a composite video signal CVBS, for an output, that is a signal that the display device (not shown) can process.

The video signal converted as above is input into the A/V output part 230 through which the moving picture data recorded on the optical disc 161 is reproduced and displayed on the display device (not shown) such as a television connected to the system.

On the other hand, the decoded audio signal is converted into an analog audio signal by the audio DAC 223, input to the A/V output part 230, and externally output through an audio output peripheral (not shown).

As aforementioned, the A/V CODEC 130 has a video encoder as a single chip designed to be built therein to convert a video signal decoded in the A/V CODEC 130 into a signal that the display device (not shown) can process, so as to simplify system hardware implementation and reduce the implementation cost.

The embodiments described above provide an A/V recording and reproducing system having a single chip therein for the video encoder and the A/V CODEC, to simplify the system implementation and reduce the cost thereof.

Aspects of the present invention can be realized as a computer-readable code written on a computer-readable recording medium. The computer-readable recording medium includes nearly all kinds of recording devices, in which data can be stored in a computer-readable manner. For example, the computer-readable recording medium includes ROM, RAM, CD-ROM, a magnetic tape, a floppy disk, an optical data storage, or a carrier wave (e.g., data transmission through the Internet). In addition, the computer-readable recording medium can be distributed over a plurality of computer systems connected to one another in a network so that data written thereon can be read by a computer in a decentralized manner. Functional programs, codes, and code segments necessary for realizing the present invention can be easily inferred from the prior art by one of ordinary skill in the art that the present invention pertains to.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An audio/video (A/V) recording and reproducing system, comprising:
a recording medium (161) recording stream data, the stream data comprising encoded digital audio data in a first format and digital video data in a second format;
an A/V output part (230) outputting audio and video signals corresponding to the stream data read out from the recording medium (161);
an A/V encoder/decoder (CODEC) (130) converting the video data into the video signal of a third format that the A/V output part (230) processes; and
an audio digital-to-analog converter (DAC) (223) converting the audio data into the audio signal of a fourth format that the A/V output part processes (230),
wherein the A/V CODEC (130) separates the stream data into the audio data and the video data, and decodes the audio data and the video data in the first and second formats.

2. The A/V recording and reproducing system as claimed in claim 1, wherein the recording medium (161) is at least one of an optical disc, a memory card, a hard disc drive, or an external device connected with the system through an interface.

3. The A/V recording and reproducing system as claimed in claim 1 or claim 2, wherein the A/V CODEC (130) decodes the video data according to an MPEG format.

4. The A/V recording and reproducing system as claimed in any preceding claim, wherein the A/V CODEC (130) further comprises a video encoder (131) converting the separated video data decoded in the first format into the video signal of the third format that the A/V output part (230) processes, and the A/V CODEC (130) and the video encoder (131) are implemented into a single chip.

5. A recording and/or reproducing apparatus, comprising:
an integrated signal processor, the processor comprising:
an audio and/or video codec (130) which receives data from an information storage medium (161), the codec (130) separating the data into audio data and video data and decoding the audio data and the video data according to an audio format and a video format, respectively; and
a video encoder (131) which converts the decoded video data into a video signal which is displayable.

6. The apparatus as claimed in claim 5, wherein the displayable video signal is any one or more of a super video signal, a mixed analog signal and a composite video signal which are displayable by a display device.

7. The apparatus as claimed in claim 5 or claim 6, further comprising:
an audio digital-to-analog converter (223) which converts the decoded audio data into an analog audio signal reproducible by an audio peripheral.

8. The apparatus as claimed in any one of claims 5-7, wherein the codec (130) decodes the video data according to an MPEG format.

9. The apparatus as claimed in any one of claims 5-7, wherein the codec (130) decodes the audio data according to a Dolby AC-3 format.

10. The apparatus as claimed in any one of claims 5-9, wherein the information storage medium (161) is an optical disc.

11. The apparatus as claimed in any one of claims 5-9, wherein the information storage medium (161) is at least one of an optical disc, a memory, a hard disk drive or an external peripheral device, the information storage medium (161) interfacing with the processor via a bus.

12. The apparatus as claimed in any one of claims 5-11, further comprising:
a user interface (150) which receives user input commands controlling the reproduction of the data.
